# EUROPÄISCHE PATENTANMELDUNG

(11) **EP 2 921 749 A1**
(43) Veröffentlichungstag der Anmeldung: **23.09.2015**
(21) Anmeldenummer: 15160321.4
(22) Anmeldetag: 23.03.2015
(51) Int. Cl.: F16K 3/02, F16K 3/06, F16K 3/32

(54) **Stellventil zur Anpassung eines Durchflusswerts**

(30) Priorität: 21.03.2014 DE 102014103902
(71) Anmelder: Samson AG, 60314 Frankfurt (DE)
(72) Erfinder: Kiesbauer, Jörg, 64859 Eppertshausen (DE)
(74) Vertreter: Puschmann Borchert Bardehle Patentanwälte Partnerschaft mbB

(57) **Zusammenfassung**

Die Erfindung betrifft ein Stellventil (10) zur Anpassung eines Durchflusswerts des Stellventils umfassend ein Ventilgehäuse (12) sowie eine gehäusefeste Drosselstruktur (14), welche einen Durchlasskanal abdeckt und wenigstens zwei Durchlässe (16) aufweist , ferner eine zur gehäusefesten Drosselstruktur (14) relativ bewegbare Verschlussstruktur (18), wobei aufgrund der Bewegung der Verschlussstruktur (18) die Durchlässe (16) derart abdeckbar sind, dass der Durchfluss durch die von der Verschlussstruktur (18) abgedeckten Durchlässe geringer ist als durch nicht abgedeckte Durchlässe (1). Die Erfindung zeichnet sich dadurch aus, dass außerhalb eines von Durchlässen (16) gebildeten Durchlassbereichs der gehäusefesten Drosselstruktur (14) Führungsmittel (22) vorgesehen sind, durch welche die bewegbare Verschlussstruktur (18) beabstandet zur gehäusefesten Drosselstruktur (14) gehalten und geführt wird.

## Beschreibung

Die Erfindung betrifft ein Stellventil zur Anpassung eines Durchflusswerts des Stellventils gemäß dem Oberbegriff des Anspruchs 1.

Die DE 10 2008 000 735 B3 betrifft ein Ventil mit einer Widerstandsstruktur, mit einer ersten Widerstandsplatte und mit einer zweiten beweglichen Widerstandsplatte. Die bewegliche Verschlussstruktur ist gegenüber der gehäusefesten Drosselstruktur derart geführt, dass eine Lageänderung der beweglichen Verschlussstruktur eine Änderung des Strömungswiderstandes zur Folge hat.

Die Verschlussstruktur wird gemäß der DE 10 2008 000 735 B3 direkt über die zweite gehäusefeste Drosselstruktur geführt, wobei bei der Bewegung Reibung zwischen Verschlussstruktur und Ventilplatte auftritt.

Um eine Reibung zwischen den Ventilplatten zu reduzieren, schlägt die DE 83 31 183 U1 vor, zwischen der gehäusefesten und der beweglichen Verschlussstruktur im Bereich des Durchlasses eine Feder zur Beabstandung der Ventilplatten anzubringen. Dadurch wird die durch Relativbewegung der Ventilplatten erzeugte Reibung erheblich verringert. Durch die Lage der Feder im Bereich der Durchlässe der Ventilplatte wird jedoch die Strömung beeinflusst.

Es ist Aufgabe der Erfindung, eine weitgehend reibungsfreie Ventilanordnung anzugeben, welche die Strömung durch den Durchlassbereich nicht beeinflusst.

Die Aufgabe wird durch die kennzeichnenden Merkmale in Verbindung mit den Oberbegriffsmerkmalen des Anspruchs 1 gelöst.

Die Unteransprüche bilden vorteilhafte Weiterbildungen der Erfindung.

In bekannter Weise umfasst ein Stellventil zur Steuerung eines Volumenstroms eines Mediums ein Ventilgehäuse sowie eine gehäusefeste Drosselstruktur, welche Durchlässe aufweist, wobei die Drosselstruktur im Wesentlichen einen Durchlasskanal abdeckt. Durch die Durchlässe, die zusammen einen Durchlassbereich bilden, ist ein maximaler Durchflusswert eingestellt. Ferner umfasst das Stellventil eine zur gehäusefesten Drosselstruktur relativ bewegbare Verschlussstruktur. Durch die bewegliche Verschlussstruktur können Durchlässe der Drosselstruktur bereichsweise abgedeckt werden, wobei aufgrund der Bewegung der Verschlussstruktur die Durchlässe derart abdeckbar sind, dass der Durchfluss durch die von der Verschlussstruktur abgedeckten Durchlässe geringer ist als durch nicht abgedeckte Durchlässe. Dadurch kann der Durchfluss des Mediums durch die abgedeckten Durchlässe hindurch weitgehend verhindert werden, insgesamt wird dadurch der Durchflusswert reduziert.

Erfindungsgemäß ist vorgesehen, dass außerhalb der Durchlässe bzw. außerhalb des Durchlassbereichs der gehäusefesten Drosselstruktur Führungsmittel angeordnet sind, durch welche die bewegbare Verschlussstruktur beabstandet zur gehäusefesten Drosselstruktur gehalten und geführt wird. Die bewegbare Verschlussstruktur ist damit in einem vordefinierten Abstand gegenüber der gehäusefesten Drosselstruktur angeordnet und geführt. Dieser Abstand ist vorzugsweise möglichst gering ausgebildet.

Auf diese Weise wird ein reibungsarmer Betrieb des Stellventils gewährleistet, ohne dass die Strömung durch den Durchlassbereich beeinflusst wird. Dies führt wiederum zu einer geringen notwendigen Betätigungskraft zur Bedienung des Stellventils.

Das Stellventil ist insbesondere als Schieberventil ausgebildet, wobei eine Bewegung der Verschlussstruktur im Wesentlichen parallel zur gehäusefesten Drosselstruktur erfolgt.

In einer vorteilhaften Ausführung ist vorgesehen, dass zur translatorischen Bewegung der beweglichen Verschlussstruktur ein Stellelement vorgesehen ist.

Das Stellelement ist in dem Gehäuse geführt und die Führungsmittel wirken insbesondere derart mit dem Stellelement zusammen, dass die bewegliche Verschlussstruktur beabstandet zu der gehäusefesten Drosselstruktur geführt ist. Die Führungsmittel sind dazu im Gehäuse und damit außerhalb des Bereichs der Durchlässe angeordnet.

In einer weiteren vorteilhaften Ausbildung kann die bewegbare Verschlussstruktur auch rotatorisch bewegbar gegenüber der gehäusefesten Drosselstruktur gelagert sein. Durch die rotatorische Lagerung wird der wirksame Durchlassbereich über den Drehwinkel der bewegbaren Verschlussstruktur in Relation zur gehäusefesten Drosselstruktur eingestellt. Das rotatorische Prinzip ermöglicht eine besonders kleine Bauform, da die Bewegung nicht aus dem Durchlassbereich herausreicht.

Vorzugsweise kann insbesondere an der gehäusefesten Drosselstruktur außerhalb des Durchlassbereichs eine Dichtstruktur vorgesehen sein, welche die bewegbare Verschlussstruktur in so einer Schließstellung abdichtet und einen Durchfluss des Mediums durch den Durchflusskanal unterbindet.

In vorteilhafter Weise können auch die Führungsmittel als eine die Durchlässe bzw. den Durchlassbereich umrahmende Dichtung, insbesondere an der gehäusefesten Drosselstruktur, ausgebildet sein. Dies hat den Vorteil, dass eine reibungsarme Führung der bewegbaren Verschlussstruktur als auch eine Abdichtung in Schließstellung erfolgen kann.

Ferner kann das Stellventil derart ausgestaltet sein, dass die bewegbare Verschlussstruktur und die gehäusefeste Drosselstruktur in einem kreissegmentartigen Bereich keine Durchlässe aufweisen. Auf diese Weise kann bei Verwendung einer rotatorisch bewegbaren Verschlussstruktur der wirksame Durchlassbereich über den Drehwinkel der bewegbaren Verschlussstruktur in Relation zur gehäusefesten Drosselstruktur eingestellt werden.

Gemäß einer vorteilhaften Weiterbildung können die Drosselstruktur und/oder die Verschlussstruktur plattenartig ausgebildet sein. Dies stellt eine besonders einfache Umsetzung dar.

In vorteilhafter Weise sind die Führungsmittel derart ausgestaltet, dass sie den durch das Medium verursachten Anpressdruck auf das Stellelement aufnehmen. Dadurch wird eine verkippungsfreie Bewegung der bewegbaren Verschlussstruktur gewährleistet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: ein erfindungsgemäßes Schieberventil in Durchlassstellung;
- Fig. 2: ein erfindungsgemäßes translatorisches Schieberventil in Schließstellung;
- Fig. 3: eine erfindungsgemäße Ventilanordnung umfassend ein erfindungsgemäßes Schieberventil in Durchlassstellung sowie ein Schließventil in Schließstellung;
- Fig. 4a: ein rotatorisches Schieberventil in Offenstellung, und
- Fig. 4b: ein rotatorisches Schieberventil in Schließstellung.

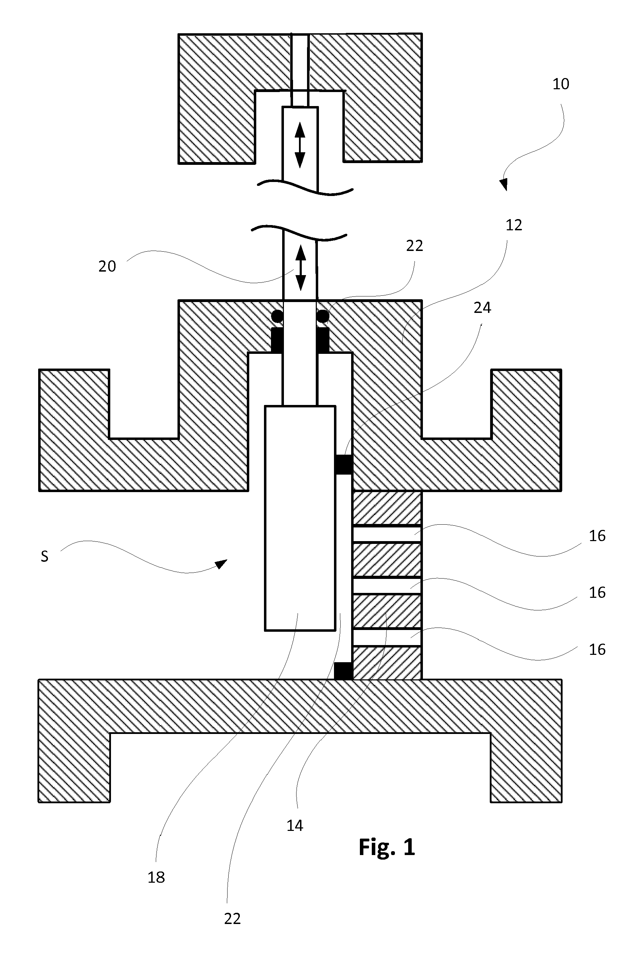

Fig. 1 zeigt ein erfindungsgemäßes translatorisches Schieberventil 10 umfassend ein Ventilgehäuse 12 mit einer gehäusefesten Drosselstruktur 14, die Durchlässe 16 aufweist. Durch die Durchlässe 16 ist ein maximaler Durchlasswert vorgegeben. Die Durchlässe 16 bilden zusammen einen Durchlassbereich, insbesondere in Form einer Kreisfläche. Die Durchlässe 16 werden je nach Ventilstellung der bewegbaren Verschlussstruktur 18 abgedeckt, wodurch der Durchflusswert variiert werden kann. Die translatorisch bewegbare Verschlussstruktur 18 ist dazu über ein Stellelement 20 verbunden, welches in Führungsmitteln 22 derart gelagert ist, dass dieses in einem Spalt 22 beabstandet die bewegbare Verschlussstruktur 18 führt. Ferner ist außerhalb des Bereichs der Durchlassstrukturen 16 ein Dichtungsrahmen 24 vorgesehen, welcher in Schließstellung der bewegbaren Verschlussstruktur 18 den Durchlassbereich vollständig abdichtet.

Insbesondere ist die bewegbare Verschlussstruktur 18 in Strömungsrichtung vor der gehäusefesten Drosselstruktur 14 angeordnet. An dem von der bewegbaren Verschlussstruktur 18 entfernten Ende des Stellelements 20 ist angedeutet, dass die Bewegung des Stellelements 20 durch das zu steuernde Medium mittels hydraulischer Beaufschlagung gesteuert werden kann.

Alternativ ist auch eine externe, mechanische, translatorische Verstellung der bewegbaren Verschlussstruktur 18 denkbar.

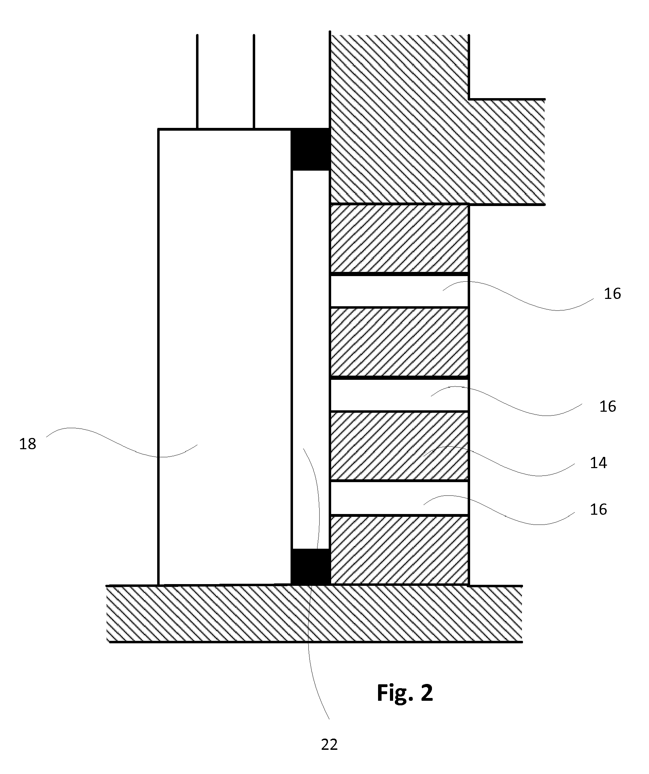

Fig. 2 zeigt ausschnittsweise das Schieberventil aus Fig. 1 in Schließstellung. In Fig. 2 ist besonders gut erkennbar, dass der umlaufende Dichtungsrahmen 24 einen Fluss durch die gehäusefeste Drosselstruktur 14 vollständig unterbindet.

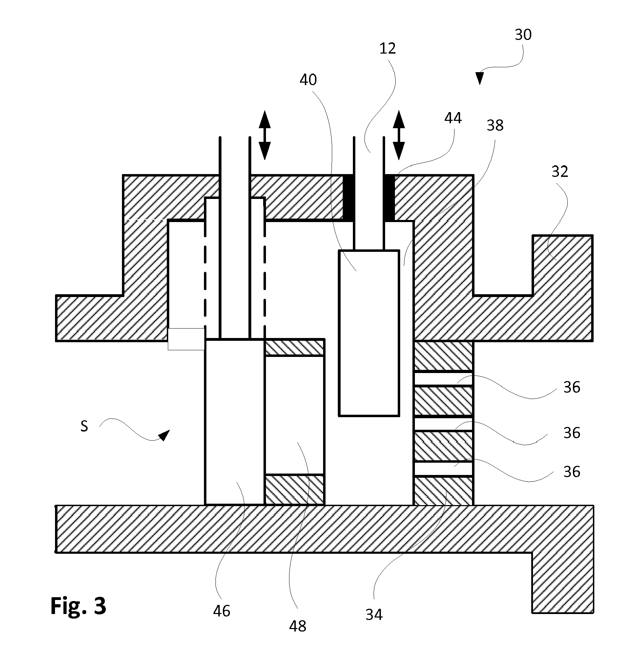

Fig. 3 zeigt ein Schieberventil 30 mit, abhängig vom Überlappungsbereich, einem Gehäuse 32, in welchem eine gehäusefeste Drosselstruktur 34 angeordnet ist, die Durchlässe 36 aufweist. Beabstandet durch den Spalt 28 ist eine bewegbare Verschlussstruktur 40 über ein Stellelement 42 betätigbar angeordnet. Durch die Bewegung der Verschlussstruktur 40 kann der Durchflusswert von bewegbaren Verschlussstruktur und Durchlassbereichen eingestellt werden. Am Ventilgehäuse, in Eingriff mit dem Stellelement, sind außerhalb des Durchlassbereichs Führungsmittel 44 vorgesehen, welche für die Beabstandung der bewegbaren Verschlussstruktur 40 von der gehäusefesten Drosselstruktur 34 sorgen. Dadurch kann ein reibungsfreies Verfahren der bewegbaren Verschlussstruktur 40 realisiert werden. Daher ist eine geringere Antriebsenergie notwendig. In dieser Ausgestaltung ist zur Unterbindung des Durchflusses ein zweites translatorisch bewegbares Stellelement 46 vorgesehen, welches einen Durchflusskanal 48 verschließt. In Offenstellung der bewegbaren Verschlussstruktur 46 kann der Durchflusswert des Schieberventils 30 durch die zweite bewegbare Verschlussstruktur 40 variiert werden. Auf diese Weise kann eine reibungsfreie Regelung realisiert werden und dennoch im Bedarfsfall ein sichere Abdichtung des Ventils gewährleistet werden.

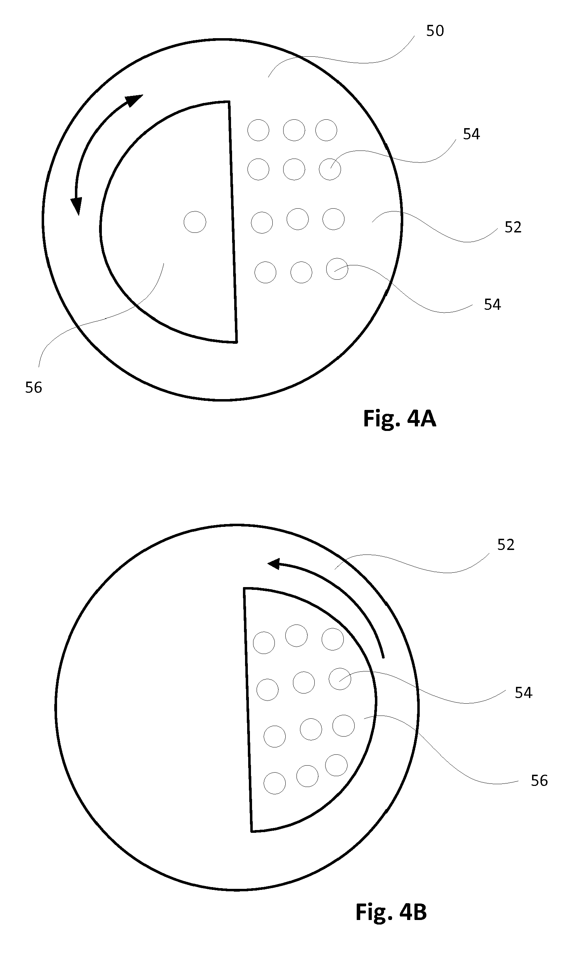

Fig. 4a zeigt ein rotatorisches Schieberelement 50 umfassend eine gehäusefeste Drosselstruktur 52, die Durchlässe 54 aufweist. Gegenüber der gehäusefesten Drosselstruktur 52 ist eine halbscheibenförmige Ventilplatte 56 vorgesehen, die rotatorisch relativ zur gehäusefesten Drosselstruktur 52 bewegbar ist. In dem in Fig. 4a dargestellten Betriebsmodus können die Durchlässe von dem zu kontrollierenden Medium durchströmt werden. Auch die bewegbare Verschlussstruktur 56 ist in Strömungsrichtung beabstandet zur gehäusefesten Drosselstruktur 52 angeordnet, so dass eine reibungsfreie Bewegung der bewegbaren Verschlussstruktur 56 möglich ist.

Fig. 4b zeigt eine Anordnung gemäß Fig. 4a, bei der die beugbare Verschlussstruktur 56 die noch angedeuteten Durchlässe 54 der gehäusefesten Drosselstruktur 52 überdeckt. Dadurch wird ein Durchfluss des Mediums durch die Durchlässe weitgehend unterbunden.

### Bezugszeichenliste

- 10: Schieberventil
- 12: Ventilgehäuse
- 14: gehäusefeste Drosselstruktur
- 16: Durchlässe
- 18: bewegbare Verschlussstruktur
- 20: Stellelement
- 22: Führungsmittel, Spalt
- 24: Dichtungsrahmen
- 28: Spalt
- 30: Schieberventil
- 32: Gehäuse
- 34: gehäusefeste Drosselstruktur
- 36: Durchlässe
- 40: bewegbare Verschlussstruktur
- 42: Stellelement
- 44: Führungsmittel
- 46: bewegbares Stellelement, bewegbare Verschlussstruktur
- 48: Durchflusskanal
- 50: rotatorisches Schieberventil
- 52: gehäusefeste Drosselstruktur
- 54: Durchlässe
- 56: bewegbare Verschlussstruktur

## Patentansprüche

1. Stellventil (10, 30) zur Anpassung eines Durchflusswerts des Stellventils umfassend ein Ventilgehäuse (12) sowie eine gehäusefeste Drosselstruktur (14, 34, 52), welche einen Durchlasskanal abdeckt und wenigstens zwei Durchlässe (16, 36, 54) aufweist, ferner eine zur gehäusefesten Drosselstruktur (14, 34, 52) relativ bewegbare Verschlussstruktur (18,40,56), wobei aufgrund der Bewegung der Verschlussstruktur (18, 40, 56) die Durchlässe (16, 36, 54) derart abdeckbar sind, dass der Durchfluss durch die von der Verschlussstruktur (18, 40, 56) abgedeckten Durchlässe geringer ist als durch nicht abgedeckte Durchlässe (16, 36, 54), **dadurch gekennzeichnet, dass** außerhalb eines von Durchlässen (16, 36, 52) gebildeten Durchlassbereichs der gehäusefesten Drosselstruktur (14,34,54) Führungsmittel (22, 44) vorgesehen sind, durch welche die bewegbare Verschlussstruktur (18, 40, 56) beabstandet zur gehäusefesten Drosselstruktur (14, 34, 52) gehalten und geführt wird.

2. Stellventil nach Anspruch 1, **dadurch gekennzeichnet, dass** die bewegbare Verschlussstruktur (18,40,56) translatorisch zur gehäusefesten Drosselstruktur (14, 34, 52) beweglich gelagert ist.

3. Stellventil nach Anspruch 2, **dadurch gekennzeichnet, dass** zur translatorischen Bewegung der beweglichen Verschlussstruktur (18,40,56) ein Stellelement (20,42,46) vorgesehen ist, welches in dem Gehäuse (32) geführt ist, und die Führungsmittel (22, 44) mit dem Stellelement (20,42,46) derart zusammenwirken, dass die bewegliche Verschlussstruktur beabstandet zu der gehäusefesten Drosselstruktur geführt ist.

4. Stellventil nach Anspruch 1, **dadurch gekennzeichnet, dass** die bewegbare Verschlussstruktur (18,40,56) rotatorisch zur gehäusefesten Drosselstruktur gelagert ist.

5. Stellventil nach einem der vorangehenden Ansprüche, **dadurch gekennzeichnet, dass** eine Dichtstruktur vorgesehen ist, welche die bewegbare Verschlussstruktur (18,40,56) in einer Schließstellung abdichtet und einen Durchfluss des Mediums unterbindet.

6. Stellventil nach Anspruch 5, **dadurch gekennzeichnet, dass** die Führungsmittel (22, 44) als eine einen Durchlassbereich, der durch die Durchlässe (16, 36, 54) gebildet ist, umrahmende Dichtung ausgebildet sind.

7. Stellventil nach einem der Ansprüche 3 oder 4, **dadurch gekennzeichnet, dass** die bewegbare und die gehäusefeste Drosselstruktur (14, 34, 52) in einem kreissegmentartigen Bereich keine Durchlässe (16, 36, 54) aufweisen.

8. Stellventil nach einem der vorangehenden Ansprüche, **dadurch gekennzeichnet, dass** die Führungsmittel (22, 44) derart ausgestaltet sind, dass sie den durch das Medium verursachten Anpressdruck auf das Stellelement (20,42,46) aufnehmen.

9. Stellventil nach einem der vorangehenden Ansprüche. **dadurch gekennzeichnet, dass** das Medium auf das Stellelement (20, 42, 46) wirkt und so eine hydraulische Verstellung der bewegbaren Verschlussstruktur (18) erfolgt.

10. Stellventil nach einem der vorangehenden Ansprüche, **dadurch gekennzeichnet, dass** das Stellventil als Schieberventil ausgebildet ist.
